# EUROPEAN PATENT APPLICATION

(11) **EP 4 842 128 A1**
(43) Date of publication of application: **18.11.2026**
(21) Application number: 25738895.9
(22) Date of filing: 06.01.2025
(51) Int. Cl.: H04W 74/00, H04W 74/0833, H04W 72/0457, H04L 5/00, H04L 27/26, H04W 4/70, H04W 84/06

(54) **NARROWBAND PHYSICAL RANDOM ACCESS CHANNEL TRANSMISSION METHOD AND DEVICE FOR NON-TERRESTRIAL NETWORK-BASED INTERNET OF THINGS**

(30) Priority: 08.01.2024 KR 20240003021; 15.02.2024 US 202463554117 P
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Jung, Minkyu
(86) International application number: PCT/KR2025/000254
(87) International publication number: WO 2025/150821

(57) **Abstract**

An operating method of a first device (100) in a wireless communication system is presented. The method comprises the steps of: transmitting a random access preamble to a base station (200) on the basis of a physical random access channel resource; and receiving, from the base station (200), a random access response including a random access preamble identifier related to the physical random access channel resource, in response to the random access preamble, wherein an orthogonal cover code can be applied to the physical random access channel resource on the basis of an orthogonal cover code index.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that may be performed by a first device may be proposed. For example, the method may comprise: transmitting, to a base station, a random access preamble based on a physical random access channel resource; and receiving, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a non-transitory computer-readable storage medium storing instructions may be proposed. For example, the instructions, when executed, may cause a first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a method that may be performed by a second device may be proposed. For example, the method may comprise: receiving, from a first device, a random access preamble based on a physical random access channel resource; and transmitting, to the first device, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, a random access preamble based on a physical random access channel resource; and transmit, to the first device, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a UE-to-base station link (e.g., a UL link) resource grid for narrowband internet of things (e.g., NB-IoT) according to an embodiment of the present disclosure.
FIG. 10 shows a random access symbol group according to an embodiment of the present disclosure.
FIG. 11 shows units constituting a physical random access channel (e.g., NPRACH) resource according to an embodiment of the present disclosure.
FIG. 12 shows an indexing scheme for a random access preamble identifier (e.g., RAPID) according to an embodiment of the present disclosure.
FIG. 13 shows a procedure of operations that may be performed by a first device, according to an embodiment of the present disclosure.
FIG. 14 shows a procedure of operations that may be performed by a second device, according to an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of' may be replaced with 'based on'.

In the present disclosure, obtaining, by a device, information may include the information being (pre-)configured for the device, the information being received by the device from another entity, and the device generating the information.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

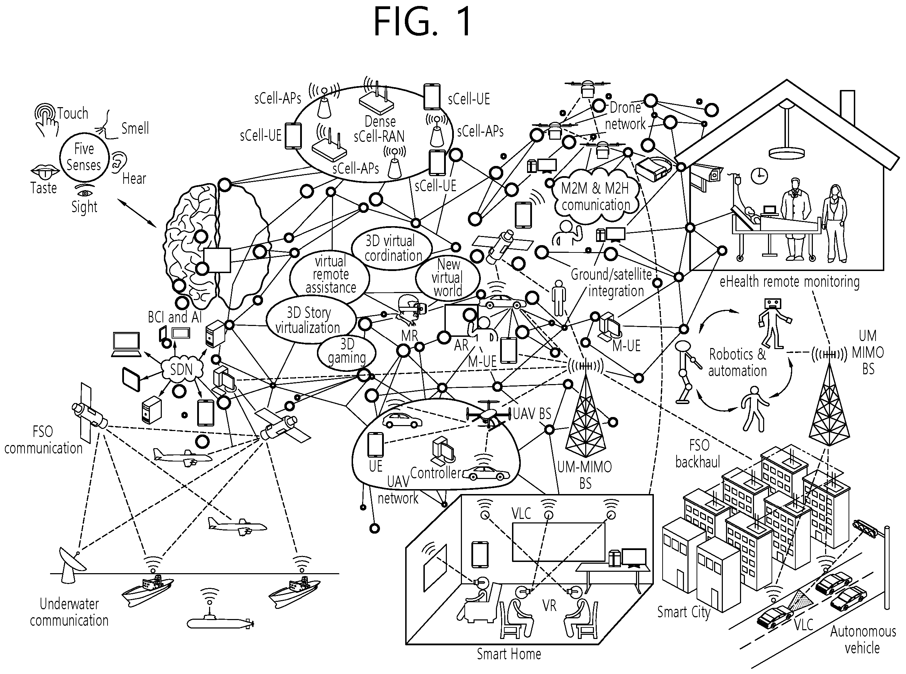

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks andcore network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

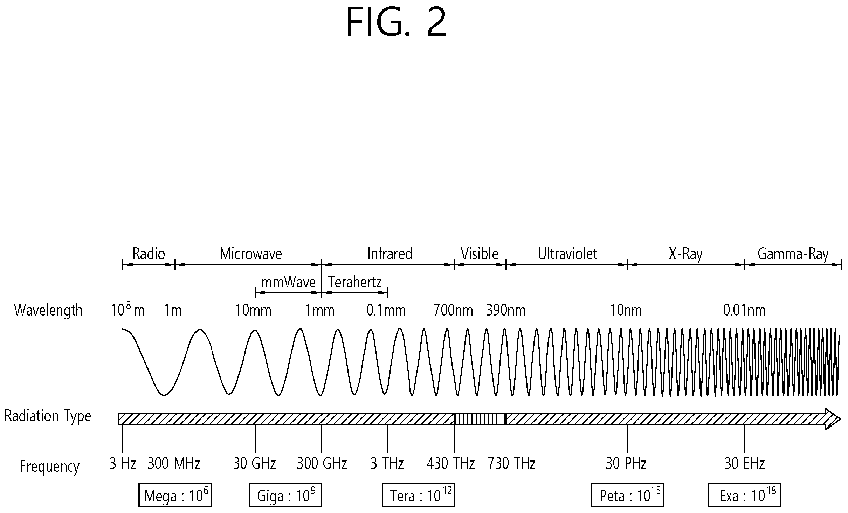

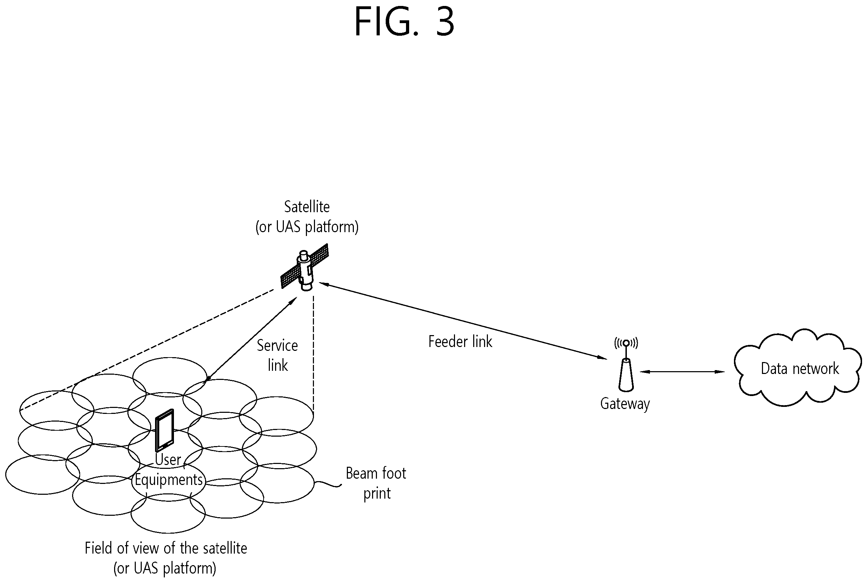

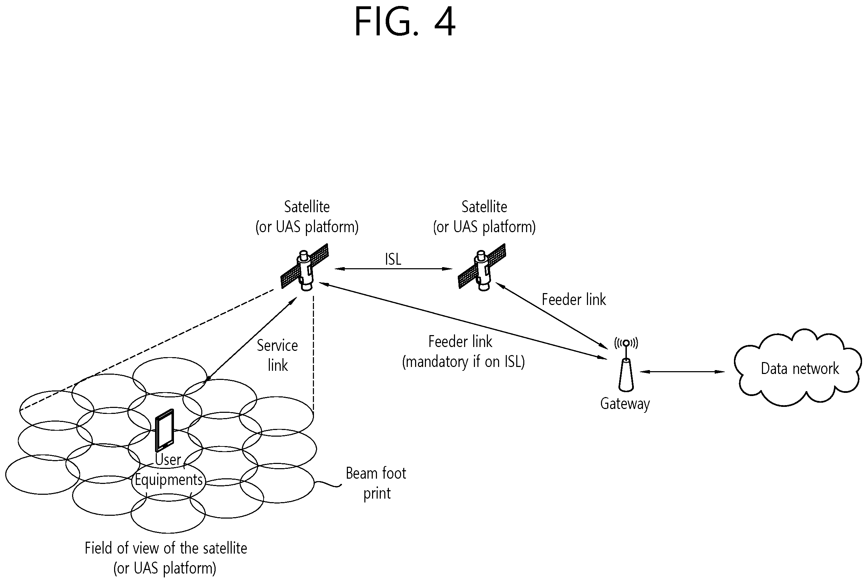

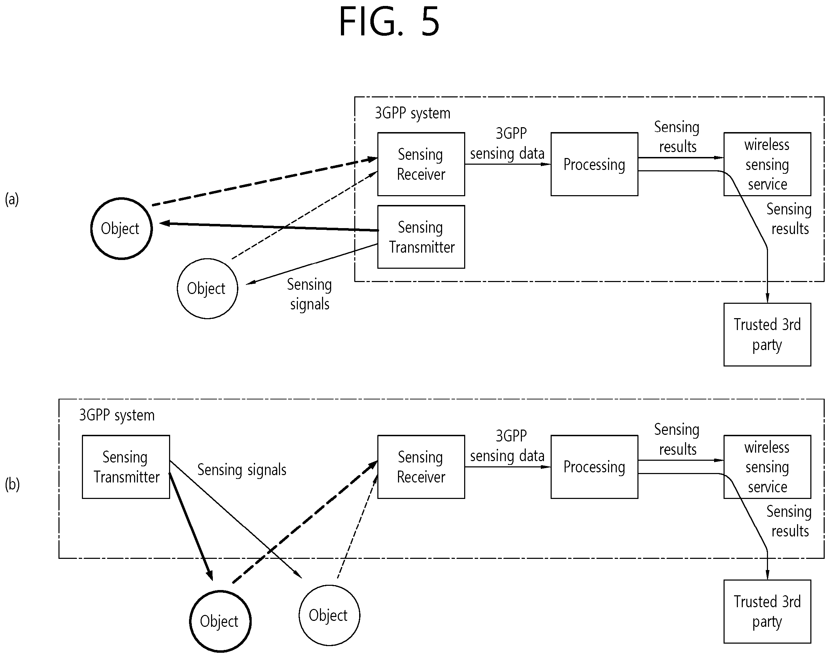

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, e.g., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

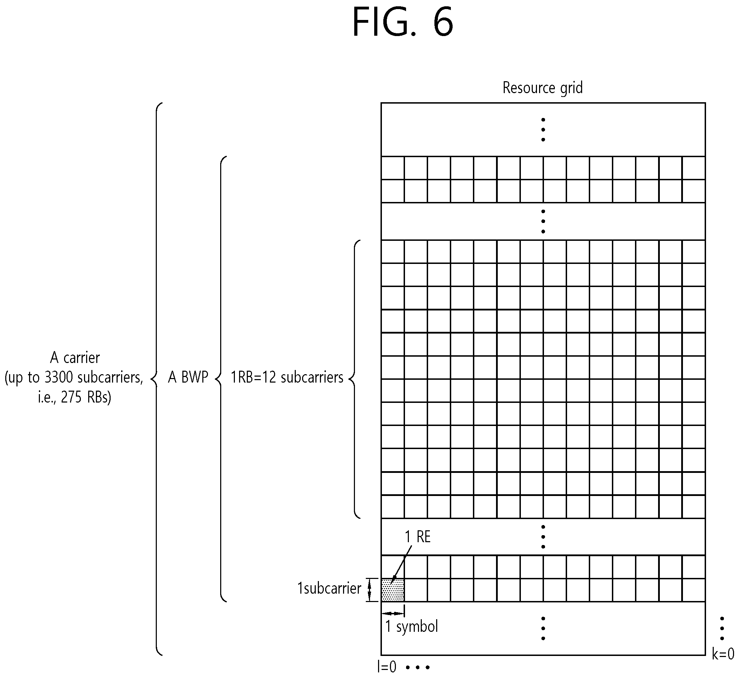

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

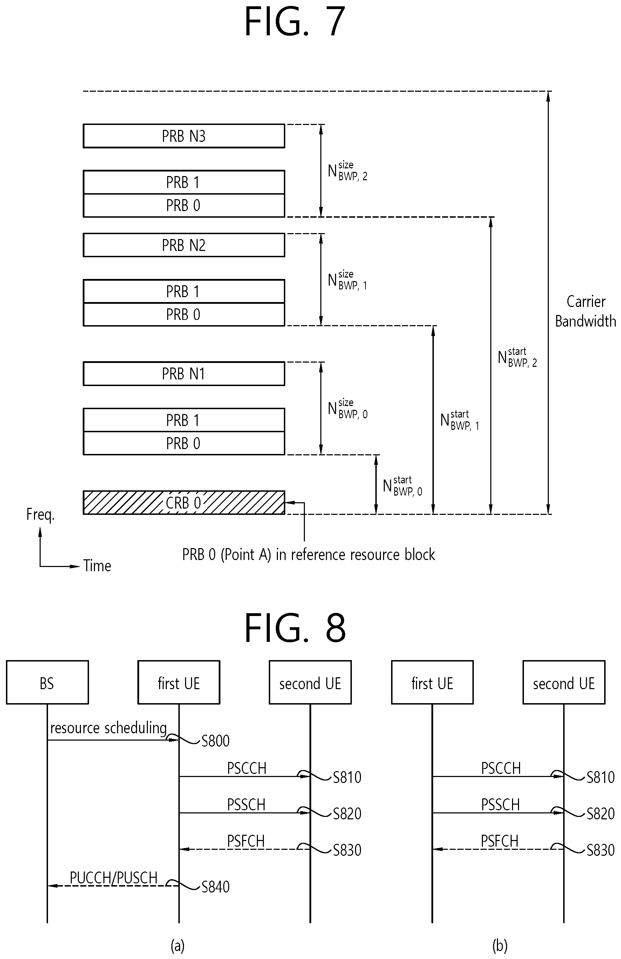

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to sidelink, a physical control channel related to sidelink, an inter-device physical control channel, or the like. In the present disclosure, PSSCH may be replaced with a shared channel, a physical shared channel, a shared channel related to sidelink, a physical shared channel related to sidelink, an inter-device physical shared channel, or the like. For example, SL communication may be replaced with inter-device communication. For example, in terms referring to various channels and/or signals related to SL communication, the SL portion may be replaced with "inter-device".

In the present disclosure, PUCCH may be replaced with a control channel, a physical control channel, a control channel related to uplink, a physical control channel related to uplink, a device-to-base station physical control channel, a UE-to-base station physical control channel, or the like. In the present disclosure, PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in terms referring to various channels and/or signals related to UL communication, the UL portion may be replaced with "device-to-base station" or "UE-to-base station".

In the present disclosure, PDCCH may be replaced with a control channel, a physical control channel, a control channel related to downlink, a physical control channel related to downlink, a base station-to-device physical control channel, a base station-to-UE physical control channel, or the like. In the present disclosure, PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in terms referring to various channels and/or signals related to DL communication, the DL portion may be replaced with "base station-to-device" or "base station-to-UE".

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a random access procedure is described.

A random access procedure may be classified into a contention-based random access procedure and a contention-free random access procedure.

For example, in a contention-based random access procedure, a UE may calculate a random access radio network temporary identifier (e.g., RA-RNTI) based on a physical random access channel (e.g., PRACH) transmission occasion for transmitting a random access preamble. Thereafter, the UE may transmit the random access preamble by using the physical random access channel (e.g., PRACH) transmission occasion and the corresponding random access radio network temporary identifier (e.g., RA-RNTI).

Thereafter, the UE may start a random access response window and monitor a base station-to-UE physical control channel (e.g., PDCCH) transmission in a search space within the random access response window by using a random access radio network temporary identifier (e.g., RA-RNTI).

Here, when the UE is performing a contention-free random access procedure, if a base station-to-UE physical control channel (e.g., PDCCH) transmission addressed by a cell radio network temporary identifier (e.g., C-RNTI) is received, the UE may determine that the random access procedure has been successfully completed.

Here, when the UE receives a random access response including a random access preamble identifier (e.g., RAPID; random access preamble identifier) corresponding to an index of a random access preamble transmitted by the UE, the UE may determine that the random access response has been successfully received. If the transmitted random access preamble was not selected from contention-based random access preambles, the UE may determine that the random access procedure has been successfully completed.

Alternatively, when a UE receives a base station-to-UE physical control channel (e.g., PDCCH) transmission including base station-to-UE communication resource allocation information for a random access radio network temporary identifier (e.g., RA-RNTI) calculated by the UE, if a received random access response includes a random access preamble identifier (e.g., RAPID; random access preamble identifier) corresponding to an index of a random access preamble transmitted by the UE, the UE may determine that the random access response has been successfully received. In this case, if the random access response includes only a random access preamble identifier (e.g., RAPID), the UE may determine that a random access procedure has been successfully completed. If the random access response does not include only a random access preamble identifier (e.g., RAPID), the UE may transmit a third message (Msg3) to a base station through a UE-to-base station transmission (e.g., a UL transmission) by using a temporary cell radio network temporary identifier (e.g., TC-RNTI) and a cell radio network temporary identifier (e.g., C-RNTI) received through the random access response.

Thereafter, a UE may monitor a fourth message (Msg4) from a base station. If a fourth message including a cell radio network temporary identifier (e.g., C-RNTI) transmitted by the UE is received before expiration of a contention resolution window, the UE may determine that a random access procedure has been successfully completed. For example, when a received fourth message includes a UE-to-base station resource (e.g., a UL resource), the UE may transmit an ACK to the base station through the UE-to-base station resource (e.g., the UL resource).

Hereinafter, narrowband internet of things (e.g., NB-IoT; narrowband internet of things) communication is described.

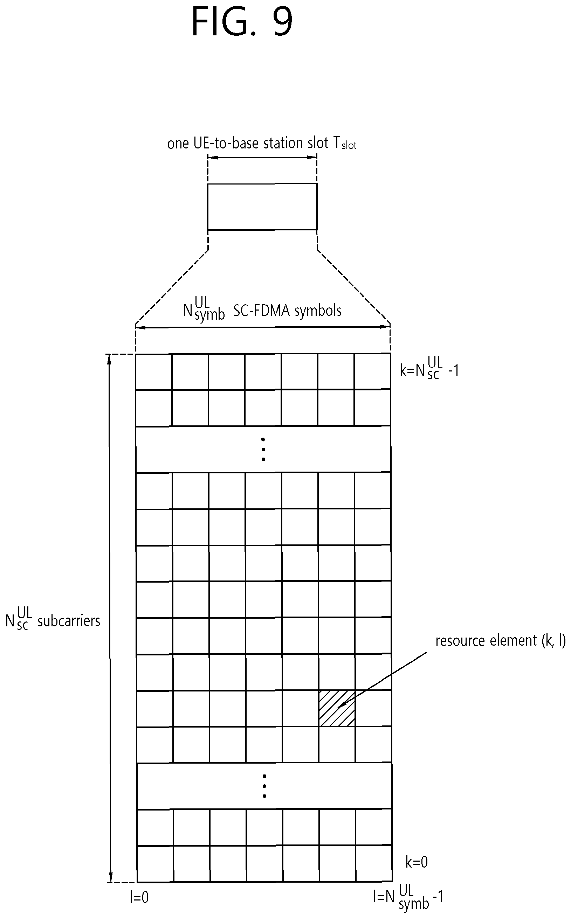

For example, a physical channel or signal transmitted in a slot may be defined by a resource grid of N^{UL}_{SC} subcarriers and N^{UL}_{symb} single carrier-frequency division multiple access (e.g., SC-FDMA; single carrier-frequency division multiple access) symbols. For example, a resource grid may be shown in FIG. 9. For example, a slot number in a radio frame may be denoted by nₛ, where nₛ ∈ {0, 1, ..., 19} for Δf = 15 kHz, and nₛ ∈ {0, 1, ..., 4} for Δf = 3.75 kHz.

FIG. 9 shows a UE-to-base station link (e.g., a UL link) resource grid for narrowband internet of things (e.g., NB-IoT) according to an embodiment of the present disclosure. An embodiment shown in FIG. 9 may be combined with various embodiments of the present disclosure.

For example, a UE-to-base station link (e.g., a UL link) bandwidth may be given in Table 3 in terms of N^{UL}_{SC} subcarriers and a slot duration Tₛₗₒₜ.

**[Table 3]**

| Subcarrier spacing | N^{UL}_{sc} | Tₛₗₒₜ |
|---|---|---|
| Δf=3.75kHz | 48 | 61440·Tₛ |
| Δf=15kHz | 12 | 15360·Tₛ |

For example, an antenna port p = 0 may be used for all UE-to-base station link (e.g., a UL link) transmissions.

Hereinafter, a resource element is described.

For example, each element in a resource grid may be referred to as a resource element and may be uniquely defined by an index pair (k, l) in a slot, where k = 0, ..., N^{UL}_{SC}-1 and l = 0, ..., N^{UL}_{symb}-1 may be indices in a frequency domain and a time domain, respectively. For example, a resource element (k, l) may correspond to a complex value α_{k,l}. For example, a quantity α_{k,l} corresponding to a resource element that is not used for transmission of a physical channel or a physical signal in a slot may be set to 0.

Hereinafter, a resource unit is described.

For example, a resource unit may be used for describing a mapping between a narrowband UE-to-base station physical shared channel (e.g., NPUSCH) and resource elements. For example, a resource unit may be defined by N^{UL}_{symb}N^{UL}ₛₗₒₜₛ single carrier-frequency division multiple access (e.g., SC-FDMA) symbols in a time domain and N^{RU}_{SC} consecutive subcarriers in a frequency domain, where N^{RU}_{SC} and N^{UL}_{symb} may be given by Table 4 and Table 5 for frame structure type 1 and type 2, respectively.

Table 4 shows examples of supported combinations of N^{RU}_{sc}, N^{UL}ₛₗₒₜₛ, and N^{UL}_{symb} for frame structure type 1.

**[Table 4]**

| NPUSCH format | Δf | N^{RU}_{sc} | N^{UL}ₛₗₒₜₛ | N^{UL}_{symb} |
|---|---|---|---|---|
| 1 | 3.75kHz | 1 | 16 | 7 |
| | 15kHz | 1 | 16 | |
| | | 3 | 8 | |
| | | 6 | 4 | |
| | | 12 | 2 | |
| 2 | 3.75kHz | 1 | 4 | |
| | 15kHz | 1 | 4 | |

Table 5 shows examples of supported combinations of N^{RU}_{sc}, N^{UL}ₛₗₒₜₛ, and N^{UL}_{symb} for frame structure type 2.

**[Table 5]**

| NPUSCH format | Δf | supported UL-DL configuration | N^{RU}_{sc} | N^{UL}ₛₗₒₜₛ | N^{UL}_{symb} |
|---|---|---|---|---|---|
| 1 | 3.75kHz | 1, 4 | 1 | 16 | |
| | 15kHz | 1, 2, 3, 4, 5 | 1 | 16 | |
| | | | 3 | 8 | |
| | | | 6 | 4 | 7 |
| | | | 12 | 2 | |
| 2 | 3.75kHz | 1, 4 | 1 | 4 | |
| | 15kHz | 1, 2, 3, 4, 5 | 1 | 4 | |

For example, a narrowband UE-to-base station physical shared channel (e.g., NPUSCH) format 1 may be used for carrying a UE-to-base station shared channel (e.g., UL-SCH), and a narrowband UE-to-base station physical shared channel (e.g., NPUSCH) format 2 may be used for carrying UE-to-base station link (e.g., a UL link) control information.

Hereinafter, mapping to a physical resource is described.

For example, each narrowband UE-to-base station physical shared channel (e.g., NPUSCH) codeword may be mapped to N_{RU}, which is one or more resource units, and each of the one or more resource units may be transmitted M^{NPUSCH}ᵣₑₚ times.

For example, a block of complex-valued symbols z(0), ..., z(M^{ap}_{symb}-1) may be multiplied by an amplitude scaling factor β_{NPUSCH} to satisfy a transmission power P_{NPUSCH}, and may be sequentially mapped, starting from z(0), to subcarriers allocated for transmission of a narrowband UE-to-base station physical shared channel (e.g., NPUSCH). For example, mapping to resource elements (k, l) corresponding to subcarriers allocated for transmission and not used for transmission of a reference signal may be performed starting from a first slot in an allocated resource unit, with an index k being incremented first and then an index l being incremented.

For example, after mapping to Nₛₗₒₜₛ slots, the Nₛₗₒₜₛ slots may be additionally repeated up to M^{NPUSCH}_{identical} - 1 times according to Equation 1 before continuing mapping of z(·) to a next slot.
[Equation 1] $\begin{matrix}{M}_{identical}^{NPUSCH} = \left\{\begin{matrix}min \left(\left⌈{M}_{rep}^{NPUSCH}/2\right⌉, 4\right) & {N}_{sc}^{RU} > 1 \\ 1 & {N}_{sc}^{RU} = 1\end{matrix}\right. \\ {N}_{slots} = \left\{\begin{matrix}1 & Δf = 3.75 kHz \\ 2 & Δf = 15 kHz\end{matrix}\right.\end{matrix}$

For example, for narrowband UE-to-base station physical shared channel (e.g., NPUSCH) formats 1 and 2 in frame structure type 2 when Δf = 3.75 kHz,
- A narrowband UE-to-base station physical shared channel (e.g., NPUSCH) transmission may be performed in a first set of Nₛₗₒₜₛ slots spanning two UE-to-base station link (e.g., a UL link) subframes that do not overlap with a UE-to-base station link (e.g., a UL link) subframe configured as invalid;
- For time division duplexing (e.g., TDD) configurations 1 and 4, if a starting position for a narrowband UE-to-base station physical shared channel (e.g., NPUSCH) is indicated as a second one of two consecutive UE-to-base station link (e.g., a UL link) subframes, transmission of the narrowband UE-to-base station physical shared channel (e.g., NPUSCH) may be deferred until a beginning of the two consecutive UE-to-base station link (e.g., a UL link) subframes.

For example, if mapping to Nₛₗₒₜₛ slots, mapping to N slots, or repetition of mapping includes a resource element that overlaps with the following,
- any configured narrowband physical random access channel (e.g., NPRACH) resource according to nprach-ParametersList in SystemInformationBlockType2-NB, or
- any configured narrowband physical random access channel (e.g., NPRACH) resource according to nprach-ParametersList given by ul-ConfigList in SystemInformationBlockType22-NB and if the UE indicates multiCarrier-narrowband physical random access channel (e.g., NPRACH) as supported, or
- any configured narrowband physical random access channel (e.g., NPRACH) resource according to nprach-ParametersList given by ul-ConfigListMixed in SystemInformationBlockType22-NB and if the UE indicates multiCarrier-narrowband physical random access channel (e.g., NPRACH) and mixedOperationMode as supported, or
- any configured narrowband physical random access channel (e.g., NPRACH) resource according to nprach-ParametersListFmt2 in SystemInformationBlockType2-NB and if the UE indicates nprach-Format2 as supported, or
- any configured narrowband physical random access channel (e.g., NPRACH) resource according to nprach-ParametersListFmt2 given by ul-ConfigList in SystemInformationBlockType23-NB and if the UE indicates multiCarrier-narrowband physical random access channel (e.g., NPRACH) and nprach-Format2 as supported, or
- any configured narrowband physical random access channel (e.g., NPRACH) resource according to nprach-ParametersListFmt2 given by ul-ConfigListMixed in SystemInformationBlockType23-NB and if the UE indicates multiCarrier-narrowband physical random access channel (e.g., NPRACH), mixedOperationMode and nprach-Format2 as supported, or
- any configured narrowband physical random access channel (e.g., NPRACH) resource according to nprach-ParametersListTDD in SystemInformationBlockType2-NB, or
- any configured narrowband physical random access channel (e.g., NPRACH) resource according to nprach-ParametersListTDD in SystemInformationBlockType22-NB and if the UE indicates multiCarrier-narrowband physical random access channel (e.g., NPRACH) as supported, or
- any configured narrowband physical random access channel (e.g., NPRACH) resource configured for Early Data Transmission and if the NPUSCH transmission is during an Early Data Transmission procedure,
for example, then,
- for Δf = 3.75 kHz the narrowband UE-to-base station physical shared channel (e.g., NPUSCH) transmission in overlapped Nₛₗₒₜₛ slots may be postponed until the next Nₛₗₒₜₛ slots not overlapping with any configured narrowband physical random access channel (e.g., NPRACH) resource.
- for Δf = 15 kHz the narrowband UE-to-base station physical shared channel (e.g., NPUSCH) transmission in overlapped Nₛₗₒₜₛ slots is postponed until the next Nₛₗₒₜₛ slots starting with the first slot satisfying nₛ mod 2 = 0 and not overlapping with any configured narrowband physical random access channel (e.g., NPRACH) resource.

For example, narrowband physical random access channel (e.g., NPRACH) gaps may be not part of the narrowband physical random access channel (e.g., NPRACH) resource. For frame structure type 2, the valid uplink subframes which are not used for narrowband physical random access channel (e.g., NPRACH) transmission when it is not possible to map G symbol groups back-to-back may not be a part of the narrowband physical random access channel (e.g., NPRACH) resource. The mapping of z(0), ..., z(M^{ap}_{symb}-1) may be then repeated until M^{NPUSCH}ᵣₑₚN_{RU}N^{UL}ₛₗₒₜₛ slots have been transmitted. After transmissions and/or postponements due to narrowband physical random access channel (e.g., NPRACH) of 256·30720 Tₛ time units, for frame structure type 1, a gap of 40·30720 Tₛ time units shall be inserted where the narrowband UE-to-base station physical shared channel (e.g., NPUSCH) transmission is postponed. The portion of a postponement due to narrowband physical random access channel (e.g., NPRACH) which coincides with a gap may be counted as part of the gap.

For example, when higher layer parameter npusch-AllSymbols is set to false, resource elements in single carrier frequency duplex multiple access (e.g., SC-FDMA) symbols overlapping with a symbol configured with SRS according to srs-SubframeConfig shall be counted in the narrowband UE-to-base station physical shared channel (e.g., NPUSCH) mapping but may not be used for transmission of the narrowband UE-to-base station physical shared channel (e.g., NPUSCH). When higher layer parameter npusch-AllSymbols is set to true, all symbols may be transmitted.

For example, if higher layer parameter resourceReservationConfigUL is configured, then in case of narrowband UE-to-base station physical shared channel (e.g., NPUSCH) format 1 transmission associated with cell radio network temporary identifier (e.g., C-RNTI) or semi-persistent scheduling cell radio network temporary identifier (e.g., SPS C-RNTI) using UE-specific narrowband base station-to-UE physical control channel (e.g., NPDCCH) search space with the Resource reservation field in the base station-to-UE control information (e.g., DCI) set to 1 including narrowband UE-to-base station physical shared channel (e.g., NPUSCH) format 1 transmission without a corresponding narrowband base station-to-UE physical control channel (e.g., NPDCCH), or in case of narrowband UE-to-base station physical shared channel (e.g., NPUSCH) format 2 transmission associated with cell radio network temporary identifier (e.g., C-RNTI) using UE-specific narrowband base station-to-UE physical control channel (e.g., NPDCCH) search space,
- In a subframe for Δf = 15 kHz or a slot for Δf = 3.75 kHz that is overlapping with any fully reserved UE-to-base station link (e.g., UL link) subframe,
- for Δf = 15 kHz, the narrowband UE-to-base station physical shared channel (e.g., NPUSCH) transmission may be postponed until the next NB-IoT UE-to-base station link (e.g., UL link) subframe that is not fully reserved.
- for Δf = 3.75 kHz, the narrowband UE-to-base station physical shared channel (e.g., NPUSCH) transmission in the slot may be postponed until the next slot spanning over two contiguous UE-to-base station link (e.g., UL link) subframes not overlapping with any UE-to-base station link (e.g., UL link) subframe that is fully reserved.
- In a subframe for Δf = 15 kHz or a slot for Δf = 3.75 kHz that is not overlapping with any fully reserved UE-to-base station link (e.g., UL link) subframe, any single carrier frequency duplex multiple access (e.g., SC-FDMA) symbols overlapping with reserved symbols shall be counted in the narrowband UE-to-base station physical shared channel (e.g., NPUSCH) mapping but may not be used for transmission of the narrowband UE-to-base station physical shared channel (e.g., NPUSCH).

For example, for a UE communicating over non terrestrial network (e.g., NTN), after transmissions (and/or postponements due to narrowband physical random access channel (e.g., NPRACH)) of N^{precompensation}_{segment} time units, for frame structure type 1, a transmission gap of N^{precompensation}_{gap} time units shall be counted for the narrowband UE-to-base station physical shared channel (e.g., NPUSCH) resource mapping but may not be used for transmission of the narrowband UE-to-base station physical shared channel (e.g., NPUSCH) according to the UE capability ntn-SegmentedPrecompensationGaps-r17. The quantity N^{precompensation}_{segment} is provided by higher layers, and the quantity of N^{precompensation}_{gap} is configured by higher layers based on the UE capability if signaled.

Hereinafter, a narrowband physical random access channel is described.

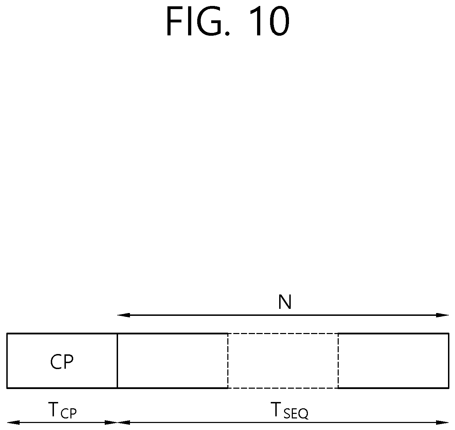

For example, a physical layer random access preamble may be based on single-carrier frequency-hopping symbol groups. For example, a symbol group may be shown in FIG. 10 and may be composed of a cyclic prefix having a length T_{CP} and a sequence of N identical symbols having a total length T_{SEQ}. For example, a total number of symbol groups in a preamble repetition unit may be denoted by P. For example, a number of temporally adjacent symbol groups may be given by G.

FIG. 10 shows a random access symbol group according to an embodiment of the present disclosure. An embodiment shown in FIG. 10 may be combined with various embodiments of the present disclosure.

For example, parameter values for frame structures 1 and 2 may be listed in Table 6 and Table 7, respectively.

Table 6 shows random access preamble parameters for frame structure type 1.

**[Table 6]**

| Preamble format | G | P | N | T_{CP} | T_{SEQ} |
|---|---|---|---|---|---|
| 0 | 4 | 4 | 5 | 2048 Tₛ | 5·8192 Tₛ |
| 1 | 4 | 4 | 5 | 8192 Tₛ | 5·8192 Tₛ |
| 2 | 6 | 6 | 3 | 24576 Tₛ | 3·24576 Tₛ |

Table 7 shows random access preamble parameters for frame structure type 2.

**[Table 7]**

| Preamble format | supported UL-DL configuration | G | P | N | T_{CP} | T_{SEQ} |
|---|---|---|---|---|---|---|
| 0 | 1, 2, 3, 4, 5 | 2 | 4 | 1 | 4768 Tₛ | 1·8192 Tₛ |
| 1 | 1, 4 | 2 | 4 | 2 | 8192 Tₛ | 2·8192 Tₛ |
| 2 | 3 | 2 | 4 | 4 | 8192 Tₛ | 4·8192 Tₛ |
| 0-a | 1, 2, 3, 4, 5 | 3 | 6 | 1 | 1536 Tₛ | 1·8192 Tₛ |
| 1-a | 1, 4 | 3 | 6 | 2 | 3072 Tₛ | 2·8192 Tₛ |

For example, the preamble consisting of P symbol groups shall be transmitted N^{NPRACH}ᵣₑₚ times. For example, for frame structure type 2, when an invalid UE-to-base station link (e.g., UL link) subframe overlaps the transmission of G symbol groups without a gap, the G symbol groups are dropped. For example, for frame structure type 2, the transmission of G symbol groups may be aligned with the subframe boundary.

For example, the transmission of a random-access preamble, if triggered by the MAC layer, may be restricted to certain time and frequency resources.

For example, a narrowband physical random access channel (e.g., NPRACH) configuration provided by higher layers may contain the following:
- narrowband physical random access channel (e.g., NPRACH) resource periodicity N^{NPRACH}_{period} (nprach-Periodicity)
- frequency location of the first subcarrier allocated to narrowband physical random access channel (e.g., NPRACH) N^{NPRACH}_{scoffset} (nprach-SubcarrierOffset)
- number of subcarriers allocated to narrowband physical random access channel (e.g., NPRACH) N^{NPRACH}_{sc} (nprach-NumSubcarriers)
- number of starting sub-carriers allocated to UE initiated random access N^{NPRACH}_{sc_cont} (nprach-NumCBRA-StartSubcarriers)
- number of narrowband physical random access channel (e.g., NPRACH) repetitions per attempt N^{NPRACH}ᵣₑₚ (numRepetitionsPerPreambleAttempt)
- narrowband physical random access channel (e.g., NPRACH) starting time N^{NPRACH}ₛₜₐᵣₜ (nprach-StartTime),
- Fraction for calculating start subcarrier index for the range of narrowband physical random access channel (e.g., NPRACH) subcarriers reserved for indication of UE support for multi-tone msg3 transmission N^{NPRACH}_{MSG3} (nprach-SubcarrierMSG3-RangeStart).

For example, narrowband physical random access channel (e.g., NPRACH) transmission can start only N^{NPRACH}ₛₜₐᵣₜ·30720 Tₛ time units after the start of a radio frame fulfilling n_{f} mod (N^{NPRACH}_{period} / 10) = 0. For frame structure type 1, after transmissions of 4·64(T_{CP} + T_{SEQ}) time units for preamble formats 0 and 1, or 16·6(T_{CP} + T_{SEQ}) time units for preamble format 2, a gap of N^{NPRACH}ₛₜₐᵣₜ·30720 Tₛ time units shall be inserted.

For example, narrowband physical random access channel (e.g., NPRACH) configurations where N^{NPRACH}_{scoffset} + N^{NPRACH}_{scoffset} + N^{NPRACH}_{sc} > N^{UL}_{sc} may not be invalid.

For example, the narrowband physical random access channel (e.g., NPRACH) start subcarrier allocated to UE initiated random access may be split in two sets of subcarriers according to Equation 2, where the second set, if present, may indicate UE support for multi-tone msg3 transmission.
[Equation 2] $\begin{matrix}set 1 = \left\{0,1,…,\left⌊{N}_{sc_cont}^{NPRACH}{N}_{MSG 3}^{NPRACH}\right⌋-1\right\} \\ set 2 = \left\{\left⌊{N}_{sc_cont}^{NPRACH}{N}_{MSG 3}^{NPRACH}\right⌋,…,{N}_{sc_cont}^{NPRACH}-1\right\}\end{matrix}$

For example, the frequency location of the narrowband physical random access channel (e.g., NPRACH) transmission may be constrained within N^{RA}_{sc} = 12 sub-carriers, and within N^{RA}_{sc} = 36 subcarriers when preamble format 2 described in Table 6 is configured. For example, frequency hopping shall be used within the 12 subcarriers and 36 subcarriers when preamble format 2 as described in Table 6 is configured, where the frequency location of the i^{th} symbol group may be given by Equation 3 where Equation 4 may be established. For example, the quantity of Equation 5 may depend on the frame structure.
[Equation 3] ${n}_{sc}^{RA} \left(i\right) = {n}_{start} + {{n}^{˜}}_{SC}^{RA} \left(i\right)$
[Equation 4] ${n}_{start} = {N}_{scoffset}^{NPRACH} + \left⌊{n}_{init}/{N}_{sc}^{RA}\right⌋ ⋅ {N}_{sc}^{RA}$
[Equation 5] ${{n}^{˜}}_{sc}^{RA} \left(i\right)$

For example, for frame structure type 1:
- if G = 4, P = 4 for preamble formats 0 and 1 as described in Table 6, Equation 6 may be established:
   [Equation 6] $\begin{matrix}{{n}^{˜}}_{SC}^{RA} \left(i\right) = \left\{\begin{matrix}\left({{n}^{˜}}_{SC}^{RA}\left(0\right)+f\left(i/4\right)\right) {modN}_{sc}^{RA} & i mod 4 = 0 and i > 0 \\ {{n}^{˜}}_{SC}^{RA} \left(i-1\right) + 1 & i mod 4 = 1 , 3 and {{n}^{˜}}_{SC}^{RA} \left(i-1\right) mod 2 = 0 \\ {{n}^{˜}}_{SC}^{RA} \left(i-1\right) - 1 & i mod 4 = 1 , 3 and {{n}^{˜}}_{SC}^{RA} \left(i-1\right) mod 2 = 1 \\ {{n}^{˜}}_{SC}^{RA} \left(i-1\right) + 6 & i mod 4 = 2 and {{n}^{˜}}_{SC}^{RA} \left(i-1\right) < 6 \\ {{n}^{˜}}_{SC}^{RA} \left(i-1\right) - 6 & i mod 4 = 2 and {{n}^{˜}}_{SC}^{RA} \left(i-1\right) \geq 6\end{matrix}\right. \\ f \left(t\right) = \left(f\left(t-1\right)+\left({\sum }_{n = 10 t + 1}^{10 t + 9} c \left(n\right){2}^{n - \left(10t+1\right)}\right)mod\left({N}_{sc}^{RA}-1\right)+1\right) {modN}_{sc}^{RA} \\ f \left(-1\right) = 0\end{matrix}$

Here, Equation 7 with nᵢₙᵢₜ may be the subcarrier selected by the MAC layer from {0, 1, ..., N^{NPRACH}_{sc}-1}, and the pseudo random sequence c(n) may be given by prior art. For example, a pseudo random sequence generator shall be initialised with cᵢₙᵢₜ = N^{Ncell}_{ID}.
[Equation 7] ${{n}^{˜}}_{SC}^{RA} \left(0\right) = {n}_{init} {modN}_{sc}^{RA}$
- if, G = 6, P = 6 for preamble format 2 as described in Table 6, Equation 8 may be established.
   [Equation 8] $\begin{matrix}{{n}^{˜}}_{SC}^{RA} \left(i\right) = \left\{\begin{matrix}\left({{n}^{˜}}_{SC}^{RA}\left(0\right)+f\left(i/6\right)\right) {modN}_{sc}^{RA} & i mod 6 = 0 and i > 0 \\ {{n}^{˜}}_{SC}^{RA} \left(i-1\right) + 1 & i mod 6 = 1 , 5 and {{n}^{˜}}_{SC}^{RA} \left(i-1\right) mod 2 = 0 \\ {{n}^{˜}}_{SC}^{RA} \left(i-1\right) - 1 & i mod 6 = 1 , 5 and {{n}^{˜}}_{SC}^{RA} \left(i-1\right) mod 2 = 1 \\ {{n}^{˜}}_{SC}^{RA} \left(i-1\right) + 3 & i mod 6 = 2 , 4 and \left⌊{{n}^{˜}}_{SC}^{RA}\left(i-1\right)/3\right⌋ mod 2 = 0 \\ {{n}^{˜}}_{SC}^{RA} \left(i-1\right) - 3 & i mod 6 = 2 , 4 and \left⌊{{n}^{˜}}_{SC}^{RA}\left(i-1\right)/3\right⌋ mod 2 = 1 \\ {{n}^{˜}}_{SC}^{RA} \left(i-1\right) + 18 & i mod 6 = 3 and {{n}^{˜}}_{SC}^{RA} \left(i-1\right) < 18 \\ {{n}^{˜}}_{SC}^{RA} \left(i-1\right) - 18 & i mod 6 = 3 and {{n}^{˜}}_{SC}^{RA} \left(i-1\right) \geq 18\end{matrix}\right. \\ f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA} \\ f \left(-1\right) = 0\end{matrix}$

For example, here, Equation 9 with nᵢₙᵢₜ may be the subcarrier selected by the MAC layer from {0, 1, ..., N^{NPRACH}_{sc}-1}, and the pseudo random sequence c(n) may be given by prior art. For example, a pseudo random sequence generator shall be initialised with cᵢₙᵢₜ = N^{Ncell}_{ID}.
[Equation 9] ${{n}^{˜}}_{SC}^{RA} \left(0\right) = {n}_{init} {modN}_{sc}^{RA}$

For example, for frame structure type 2:
- if G = 2, P = 4 for preamble formats 0, 1, and 2 as described in Table 7, Equation 10 may be established.
   [Equation 10] $\begin{matrix}{{n}^{˜}}_{SC}^{RA} \left(i\right) = \left\{\begin{matrix}Y & i mod 8 = 0 , 2 and i > 0 \\ {{n}^{˜}}_{SC}^{RA} \left(i-1\right) + 1 & i mod 8 = 1 and {{n}^{˜}}_{SC}^{RA} \left(i-1\right) = 0 , 2 , 4 , 6 , 8 , 10 \\ {{n}^{˜}}_{SC}^{RA} \left(i-1\right) - 1 & i mod 8 = 1 and {{n}^{˜}}_{SC}^{RA} \left(i-1\right) = 1 , 3 , 5 , 7 , 9 , 11 \\ {{n}^{˜}}_{SC}^{RA} \left(i-1\right) + 6 & i mod 8 = 3 and {{n}^{˜}}_{SC}^{RA} \left(i-1\right) = 0 , 1 , 2 , 3 , 4 , 5 \\ {{n}^{˜}}_{SC}^{RA} \left(i-1\right) - 6 & i mod 8 = 3 and {{n}^{˜}}_{SC}^{RA} \left(i-1\right) = 6 , 7 , 8 , 9 , 10 , 11 \\ 2 \left⌊\frac{Y}{2}\right⌋ + 1 & i mod 8 = 4 and {{n}^{˜}}_{SC}^{RA} \left(i-4\right) = 0 , 2 , 4 , 6 , 8 , 10 \\ 2 \left⌊\frac{Y}{2}\right⌋ & i mod 8 = 4 and {{n}^{˜}}_{SC}^{RA} \left(i-4\right) = 1 , 3 , 5 , 7 , 9 , 11 \\ {{n}^{˜}}_{SC}^{RA} \left(i-1\right) - 1 & i mod 8 = 5 and {{n}^{˜}}_{SC}^{RA} \left(i-1\right) = 1 , 3 , 5 , 7 , 9 , 11 \\ {{n}^{˜}}_{SC}^{RA} \left(i-1\right) + 1 & i mod 8 = 5 and {{n}^{˜}}_{SC}^{RA} \left(i-1\right) = 0 , 2 , 4 , 6 , 8 , 10 \\ Y mod 6 + 6 & i mod 8 = 6 and {{n}^{˜}}_{SC}^{RA} \left(i-4\right) = 0 , 1 , 2 , 3 , 4 , 5 \\ Y mod 6 & i mod 8 = 6 and {{n}^{˜}}_{SC}^{RA} \left(i-4\right) = 6 , 7 , 8 , 9 , 10 , 11 \\ {{n}^{˜}}_{SC}^{RA} \left(i-1\right) - 6 & i mod 8 = 7 and {{n}^{˜}}_{SC}^{RA} \left(i-1\right) = 6 , 7 , 8 , 9 , 10 , 11 \\ {{n}^{˜}}_{SC}^{RA} \left(i-1\right) + 6 & i mod 8 = 7 and {{n}^{˜}}_{SC}^{RA} \left(i-1\right) = 0 , 1 , 2 , 3 , 4 , 5\end{matrix}\right. \\ Y = \left({{n}^{˜}}_{SC}^{RA}\left(0\right)+f\left(i/2\right)\right) {modN}_{sc}^{RA} \\ f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA} \\ f \left(-1\right) = 0\end{matrix}$

For example, here, Equation 11 with nᵢₙᵢₜ may be the subcarrier selected by the MAC layer from {0, 1, ..., N^{NPRACH}_{sc}-1}, and the pseudo random sequence c(n) may be given by prior art. For example, a pseudo random sequence generator shall be initialised with cᵢₙᵢₜ = N^{Ncell}_{ID}.
[Equation 11] ${{n}^{˜}}_{SC}^{RA} \left(0\right) = {n}_{init} {modN}_{sc}^{RA}$
- if G = 3, P = 6 for preamble formats 0-a, 1-a, as described in Table 7, Equation 12 may be established.
   [Equation 12] $\begin{matrix}{{n}^{˜}}_{SC}^{RA} \left(i\right) = \left\{\begin{matrix}\left({{n}^{˜}}_{SC}^{RA}\left(0\right)+f\left(i/3\right)\right) {modN}_{sc}^{RA} & i mod 6 = 0 , 3 and i > 0 \\ {{n}^{˜}}_{SC}^{RA} \left(i-1\right) + 1 & i mod 6 = 1 and {{n}^{˜}}_{SC}^{RA} \left(i-1\right) = 0 , 2 , 4 , 6 , 8 , 10 \\ {{n}^{˜}}_{SC}^{RA} \left(i-1\right) - 1 & i mod 6 = 2 and {{n}^{˜}}_{SC}^{RA} \left(i-2\right) = 0 , 2 , 4 , 6 , 8 , 10 \\ {{n}^{˜}}_{SC}^{RA} \left(i-1\right) - 1 & i mod 6 = 1 and {{n}^{˜}}_{SC}^{RA} \left(i-1\right) = 1 , 3 , 5 , 7 , 9 , 11 \\ {{n}^{˜}}_{SC}^{RA} \left(i-1\right) + 1 & i mod 6 = 2 and {{n}^{˜}}_{SC}^{RA} \left(i-2\right) = 1 , 3 , 5 , 7 , 9 , 11 \\ {{n}^{˜}}_{SC}^{RA} \left(i-1\right) + 6 & i mod 6 = 4 and {{n}^{˜}}_{SC}^{RA} \left(i-1\right) = 0 , 1 , 2 , 3 , 4 , 5 \\ {{n}^{˜}}_{SC}^{RA} \left(i-1\right) - 6 & i mod 6 = 5 and {{n}^{˜}}_{SC}^{RA} \left(i-2\right) = 0 , 1 , 2 , 3 , 4 , 5 \\ {{n}^{˜}}_{SC}^{RA} \left(i-1\right) - 6 & i mod 6 = 4 and {{n}^{˜}}_{SC}^{RA} \left(i-1\right) = 6 , 7 , 8 , 9 , 10 , 11 \\ {{n}^{˜}}_{SC}^{RA} \left(i-1\right) + 6 & i mod 6 = 5 and {{n}^{˜}}_{SC}^{RA} \left(i-2\right) = 6 , 7 , 8 , 9 , 10 , 11\end{matrix}\right. \\ f \left(t\right) = \left(f\left(t-1\right)+\left({\sum }_{n = 10 t + 1}^{10 t + 9} c \left(n\right) {2}^{n - \left(10t+1\right)}\right)mod\left({N}_{sc}^{RA}-1\right)+1\right) {modN}_{sc}^{RA} \\ f \left(-1\right) = 0\end{matrix}$

For example, here, Equation 13 with nᵢₙᵢₜ may be the subcarrier selected by the MAC layer from {0, 1, ..., N^{NPRACH}_{sc}-1}, and the pseudo random sequence c(n) may be given by prior art. For example, a pseudo random sequence generator shall be initialised with cᵢₙᵢₜ = N^{Ncell}_{ID}.
[Equation 13] ${{n}^{˜}}_{SC}^{RA} \left(0\right) = {n}_{init} {modN}_{sc}^{RA}$

Meanwhile, in a next-generation system, there may be a need to increase multiplexing capacity among transmissions of narrowband internet of things (e.g., NB-IoT; narrowband internet of things) UEs, and in particular, the importance thereof may be greater in a non-terrestrial network (e.g., NTN; non-terrestrial network) system for internet of things (e.g., IoT).

Various embodiments of the present disclosure and/or combinations of the embodiments may be differently applied to single-tone transmission and multi-tone transmission.

Various embodiments of the present disclosure and/or combinations thereof may be differently applied according to a number of subcarriers allocated for transmission.

Various embodiments of the present disclosure and/or combinations thereof may be differently applied according to transmission content of a narrowband UE-to-base station physical shared channel (e.g., NPUSCH; narrowband physical uplink shared channel) (for example, a narrowband system information block (e.g., SIB1-NB; system information block 1-narrowband), a system information block (e.g., SIB), paging, information related to a random access procedure, or other data).

Various embodiments of the present disclosure and/or combinations thereof may be differently applied according to a payload type of a satellite (for example, a regenerative payload or a transparent payload).

Various embodiments of the present disclosure and/or combinations thereof may be differently applied per type of a non-terrestrial network node (for example, a geo-stationary earth orbit (GEO), a non geo-stationary earth orbit (NGEO), a low earth orbit (LEO), a medium earth orbit (MEO), a high altitude station platform (HASP), or a drone), altitude, fixed beam footprint, or cell-moving beam footprint.

Various embodiments of the present disclosure and/or combinations thereof may be differently applied depending on whether a narrowband internet of things (e.g., NB-IoT) UE-to-base station transmission (e.g., a UL transmission) occurs in a pre-configured UE-to-base station communication (e.g., a UL communication) resource.

Meanwhile, a narrowband physical random access channel (e.g., NPRACH; narrowband physical random access channel) may include a first unit (or a resource of the first unit) of a symbol group composed of one cyclic prefix (e.g., CP; cyclic prefix) symbol and N sequence symbols, and P first units (or resources of the first units), on a time axis (or along a time axis) in units of the first unit (or the resource of the first unit), may constitute a second unit (or a resource of the second unit) according to a first frequency hopping pattern.

For example, P first units (or resources of the first units) constituting a second unit (or a resource of the second unit) according to a first frequency hopping pattern may mean that frequency resources of symbol groups included in the first units (or the resources of the first units) do not overlap with each other in a time domain of the second unit (or the resource of the second unit).

Meanwhile, for example, the P symbol groups may belong to consecutive time resources and/or discontinuous time resources.

Meanwhile, for example, G first units (or resources of the first units) among symbol groups in the second unit may belong to consecutive time resources. For example, G symbol groups (or first units (or resources of the first units)) in the second unit may belong to consecutive time resources.

For example, a UE may perform a physical random access channel (e.g., NPRACH) transmission in units of a third unit (or a resource of the third unit) in which K (for example, 64 for a physical random access channel (e.g., NPRACH) preamble format 0/1, 16 for a physical random access channel (e.g., NPRACH) preamble format 2, or a value configured through a system information block (e.g., SIB) or RRC) second units (or resources of the second units) are configured according to a second frequency hopping pattern.

For example, a UE may perform a physical random access channel (e.g., NPRACH) transmission based on a third unit (or a resource of the third unit) constituted by K (for example, 64 for a physical random access channel (e.g., NPRACH) preamble format 0/1, 16 for a physical random access channel (e.g., NPRACH) preamble format 2, or a value configured through a system information block (e.g., SIB) or RRC) second units (or resources of the second units) according to a second frequency hopping pattern.

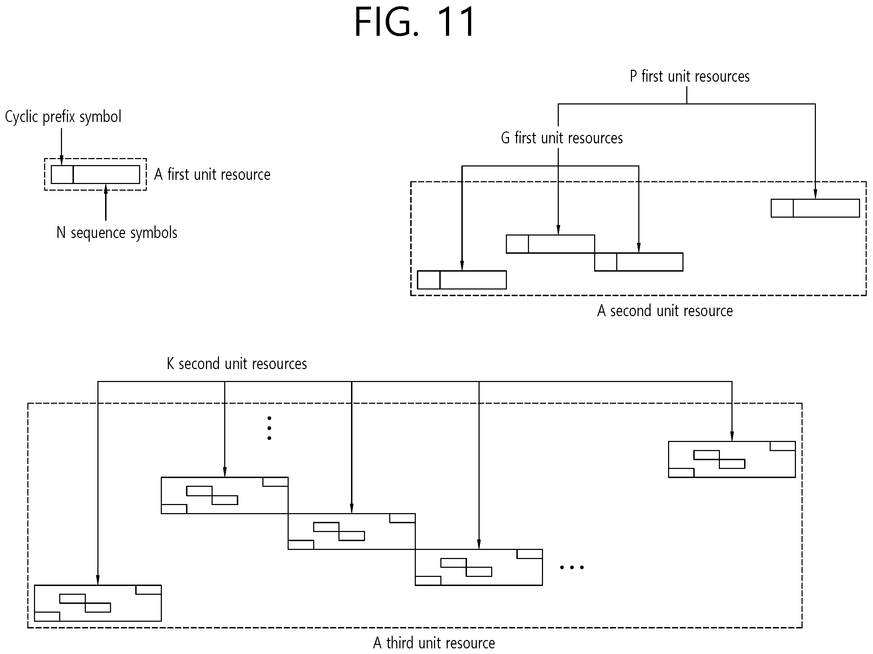

FIG. 11 shows units constituting a physical random access channel (e.g., NPRACH) resource according to an embodiment of the present disclosure. An embodiment shown in FIG. 11 may be combined with various embodiments of the present disclosure.

Referring to FIG. 11, a first unit resource, a second unit resource, and a third unit resource, which may constitute a physical random access channel (e.g., NPRACH) resource described in the present disclosure, are shown.

For example, a first unit resource may be composed of one cyclic prefix (e.g., CP) symbol and N sequence symbols. For example, in order for an orthogonal cover code to be applied to a physical random access channel (e.g., NPRACH), a length of the one cyclic prefix (e.g., CP) symbol and a length of each sequence symbol may need to be the same.

For example, a second unit resource may include G temporally consecutive first unit resources and may be composed of P first unit resources including the G first unit resources.

For example, a third unit resource may be composed of K second unit resources, and K may have a value exemplified in the present disclosure. For example, K may be 64 for a physical random access channel (e.g., NPRACH) preamble format 0/1, 16 for a physical random access channel (e.g., NPRACH) preamble format 2, or a value configured through a system information block (e.g., SIB) or RRC.

For example, applying an orthogonal cover code (e.g., OCC; orthogonal cover code) to a physical random access channel (e.g., NPRACH) may be limited to a case in which a physical random access channel (e.g., NPRACH) format 1 and/or a physical random access channel (e.g., NPRACH) format 2 is used and/or a length of a cyclic prefix (e.g., CP) symbol and a length of each symbol of a sequence are the same.

A reason therefor may be that, when an orthogonal cover code (e.g., OCC) is applied, orthogonality may not be guaranteed if lengths of symbols are different. For example, the above constraint may apply when a unit to which the orthogonal cover code (e.g., OCC) is applied is a symbol set in a first unit (or a resource of the first unit) and/or a first unit (or a resource of the first unit).

For example, a unit to which an orthogonal cover code (e.g., OCC) is applied for a physical random access channel (e.g., NPRACH) may be a third unit (or a resource of the third unit) or a group of a plurality of second units (or resources of the second units) in a third unit (or a resource of the third unit).

For example, the length of the orthogonal cover code (e.g., OCC) may be 64 (for example, when a third unit (or a resource of the third unit) is used as a unit) (for example, for a physical random access channel (e.g., NPRACH) format 0/1), 16 (for example, for a physical random access channel (e.g., NPRACH) format 2), or a repetition value (or a repetition count value) configured through a system information block (e.g., SIB) or RRC.

For example, the length of the orthogonal cover code (e.g., OCC) may be (for example, when a group of a plurality of second units (or resources of the second units) is used as a unit) (for example, for a physical random access channel (e.g., NPRACH) format 0/1) a divisor of 64 (a value selected from 2, 4, 8, 16, and 32), (for example, for a physical random access channel (e.g., NPRACH) format 2) a divisor of 16 (a value selected from 2, 4, and 8), or a divisor of a repetition (or a repetition count) value configured through a system information block (e.g., SIB) or RRC.

For example, a unit to which an orthogonal cover code (e.g., OCC) is applied for a physical random access channel (e.g., NPRACH) may be a second unit (or a resource of the second unit) or a group of a plurality of first units (or resources of the first units) in a second unit (or a resource of the second unit).

For example, the length of the orthogonal cover code (e.g., OCC) may be (for example, when a second unit (or a resource of the second unit) is used as a unit) (for example, for a physical random access channel (e.g., NPRACH) format 0/1) 4, or (for example, for a physical random access channel (e.g., NPRACH) format 2) 6.

For example, the length of the orthogonal cover code (e.g., OCC) may be (for example, when a group of a plurality of first units is used as a unit) (for example, for a physical random access channel (e.g., NPRACH) format 0/1) 2, or (for example, for a physical random access channel (e.g., NPRACH) format 2) a divisor of 6 (a value selected from 2 and 3).

For example, an orthogonal cover code (e.g., OCC) to be applied in a second unit (or a resource of the second unit) may be such that an interval between subcarriers of a first unit (or a resource of the first unit) is equal to or less than a certain level (for example, a gap of 1, 3, or 4 subcarriers).

For example, a unit to which an orthogonal cover code (e.g., OCC) is applied for a physical random access channel (e.g., NPRACH) may be the group of the G second units (or resources of the second units). This may be for further securing a situation (or possibility) in which orthogonality can be guaranteed by allowing a single orthogonal cover code (e.g., OCC) to be applied to temporally consecutive time resources.

For example, a unit to which an orthogonal cover code (e.g., OCC) is applied for a physical random access channel (e.g., NPRACH) may be a first unit (or a resource of the first unit) or a plurality of symbol sets in a first unit (or a resource of the first unit).

For example, a cyclic prefix (e.g., CP) symbol may be excluded from a target to which an orthogonal cover code (e.g., OCC) is applied. For example, a target to which an orthogonal cover code (e.g., OCC) is applied may be limited to sequence symbols.

For example, a length of an orthogonal cover code (e.g., OCC) may be the same as an N value determined according to a preamble format.

For example, when an N value determined according to a preamble format is 5, a length of an orthogonal cover code (e.g., OCC) may be 2 or 3, and an orthogonal cover code (e.g., OCC) may be respectively applied to first 2 symbols and next 3 symbols in a sequence in a first unit (or a resource of the first unit), or an orthogonal cover code (e.g., OCC) may be respectively applied to first 3 symbols and next 2 symbols in a sequence in a first unit (or a resource of the first unit).

In various embodiments of the present disclosure, a (representative) orthogonal cover code (e.g., OCC) (index) to be applied to a physical random access channel (e.g., NPRACH) may be determined by a UE (for example, at least when a physical random access channel (e.g., NPRACH) transmission is initialized in a higher layer), and/or may be indicated in a downlink control information (e.g., DCI; downlink control information) format corresponding to a narrowband base station-to-UE physical control channel (e.g., NPDCCH) order (for example, at least when it is based on the narrowband base station-to-UE physical control channel (e.g., NPDCCH) order).

For example, when an orthogonal cover code (e.g., OCC) index to be applied to a physical random access channel (e.g., NPRACH) is indicated through a narrowband base station-to-UE physical control channel (e.g., NPDCCH) order, a start subcarrier index in the narrowband base station-to-UE physical control channel (e.g., NPDCCH) order may be extended to indicate a physical random access channel (e.g., NPRACH) preamble index, and/or indexing for the physical random access channel (e.g., NPRACH) preamble index may be performed in a manner in which indexing starts from a lowest subcarrier index and a lowest orthogonal cover code (e.g., OCC) index, increases in an orthogonal cover code (e.g., OCC) index domain, and then repeats increasing a subcarrier index.

For example, a subset in a subcarrier set for a physical random access channel (e.g., NPRACH), in which a physical random access channel (e.g., NPRACH) to which an orthogonal cover code (e.g., OCC) is applied can be transmitted, may be pre-configured and/or configured/indicated through a system information block (e.g., SIB) and/or RRC.

For example, a set of start subcarrier through which a physical random access channel (e.g., NPRACH) to which an orthogonal cover code (e.g., OCC) is applied can be transmitted may be a set for contention-free random access or a subset thereof.

For example, a set of start subcarrier through which a physical random access channel (e.g., NPRACH) to which an orthogonal cover code (e.g., OCC) is applied can be transmitted may correspond to a subcarrier set for a case in which a reference signal received power (e.g., RSRP; reference signal received power) measurement value is equal to or greater than a certain level and/or a coverage enhancement mode set. A reason therefor may be to allow code division multiplexing (e.g., CDM; code division multiplexing) through an orthogonal cover code (e.g., OCC) when reception performance is equal to or greater than a certain level.

For example, whether a UE applies an orthogonal cover code (e.g., OCC) to a physical random access channel (e.g., NPRACH) may be limited to a case in which a reference signal received power (e.g., RSRP) measurement value for a base station-to-UE reference signal (e.g., a DL reference signal) is within a specific range and/or a coverage enhancement mode level is the same or within a specific range. This may be because a near-far problem may occur when code division multiplexing (e.g., CDM; code division multiplexing) is performed among physical random access channels (e.g., NPRACHs) having significantly different received powers at a base station. For example, the specific range may be predefined, configured/indicated through a system information block (e.g., SIB) or RRC, and/or pre-configured.

In various embodiments of the present disclosure, a physical random access channel (e.g., NPRACH) to which an orthogonal cover code (e.g., OCC) is applied may include a case in which the orthogonal cover code (e.g., OCC) is an all-ones code, and/or may be limited to a physical random access channel (e.g., NPRACH) to which an orthogonal cover code (e.g., OCC) other than an all-ones code is applied.

According to an embodiment of the present disclosure, when an orthogonal cover code (e.g., OCC) is applied to a physical random access channel (e.g., NPRACH), a random access preamble identifier (e.g., RAPID; random access preamble identifier) may correspond to a start subcarrier index for the physical random access channel (e.g., NPRACH) and/or a (representative) orthogonal cover code (e.g., OCC) index.

For example, when physical random access channels (e.g., NPRACHs) to which different orthogonal cover codes (e.g., OCCs) are applied are transmitted through a same resource, a base station may transmit a random access response (e.g., RAR; random access response) to UEs through a same narrowband base station-to-UE physical control channel (e.g., NPDCCH) / narrowband base station-to-UE physical shared channel (e.g., NPDSCH; narrowband physical downlink shared channel) with respect to the different physical random access channels (e.g., NPRACHs).

For example, indexing for a random access preamble identifier (e.g., RAPID) may be performed in a manner in which a start subcarrier index is incremented first and then an orthogonal cover code (e.g., OCC) index is incremented, starting from a lowest orthogonal cover code (e.g., OCC) index or an orthogonal cover code (e.g., OCC) index for all ones, wherein the process is repeated. An advantage thereof may be that interpretation and understanding of a random access preamble identifier (e.g., RAPID) are maintained as they are for a UE that does not support an orthogonal cover code (e.g., OCC) for a physical random access channel (e.g., NPRACH).

For example, indexing for a random access preamble identifier (e.g., RAPID) may be performed in a manner in which a start subcarrier index is incremented first and then an orthogonal cover code (e.g., OCC) index is incremented, starting from a lowest orthogonal cover code (e.g., OCC) index or an orthogonal cover code (e.g., OCC) index for all ones, wherein the process is repeated. An advantage thereof may be that even a UE that does not support an orthogonal cover code (e.g., OCC) for a physical random access channel (e.g., NPRACH) can interpret and understand a random access preamble identifier (e.g., RAPID).

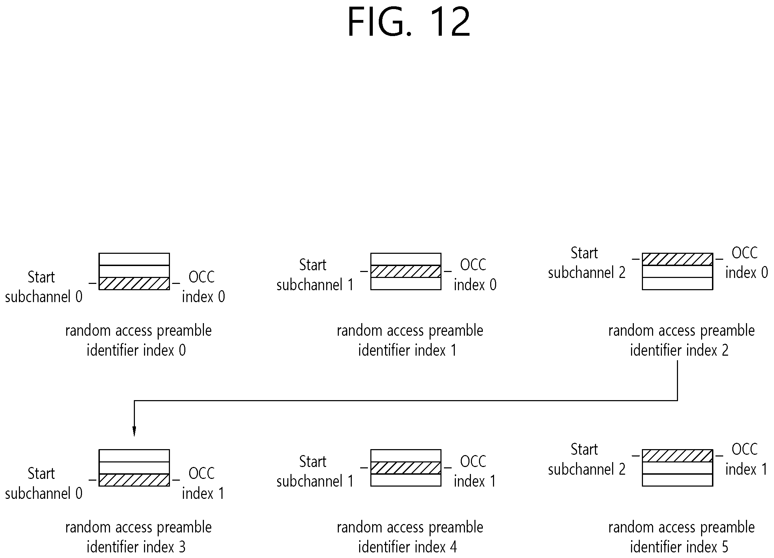

FIG. 12 shows an indexing scheme for a random access preamble identifier (e.g., RAPID) according to an embodiment of the present disclosure. An embodiment shown in FIG. 12 may be combined with various embodiments of the present disclosure.

Referring to FIG. 12, an indexing scheme of random access preamble identifier (e.g., RAPID) indexes for a random access preamble identifier (e.g., RAPID) related to a random access preamble transmitted through a physical random access channel (e.g., NPRACH) is shown in ascending order of the indexes. For example, in the present embodiment, it is assumed that an orthogonal cover code (e.g., OCC) is applied to a physical random access channel (e.g., NPRACH).

For example, a random access preamble identifier index 0 may be related to a physical random access channel (e.g., NPRACH) having a starting subchannel index of 0 and an orthogonal cover code (OCC) index of 0. A next index, a random access preamble identifier index 1, may be related to a physical random access channel (e.g., NPRACH) having a starting subchannel index of 1, which is increased by 1 from a previous index, and an orthogonal cover code (OCC) index of 0. A next index, a random access preamble identifier index 2, may be related to a physical random access channel (e.g., NPRACH) having a starting subchannel index of 2, which is increased by 1 from the previous index, and an orthogonal cover code (OCC) index of 0.

Here, only for describing an indexing scheme, a maximum number of starting subchannels is assumed to be 3. A next index, a random access preamble identifier index 3, may be related to a physical random access channel (e.g., NPRACH) having a starting subchannel index of 0, since the starting subchannel index reached a maximum value at a previous index, and an orthogonal cover code (OCC) index of 1, which is increased by 1. A next index, a random access preamble identifier index 4, may be related to a physical random access channel (e.g., NPRACH) having a starting subchannel index of 1, which is increased by 1 from the previous index, and an orthogonal cover code (OCC) index of 1. As described above, indexes of a random access preamble identifier (e.g., RAPID) may be indexed such that a starting subchannel index is incremented first and then an orthogonal cover code (OCC) index is incremented.

According to an embodiment of the present disclosure, when an orthogonal cover code (e.g., OCC) is applied to a physical random access channel (e.g., NPRACH), a random access radio network temporary identifier (e.g., RA-RNTI; random access radio network temporary identifier) may have a different value according to a (representative) orthogonal cover code (e.g., OCC) index.

For example, in the above case, when physical random access channels (e.g., NPRACHs) to which different orthogonal cover codes (e.g., OCCs) are applied are transmitted through a same resource, a base station may transmit a random access response (e.g., RAR) to UEs through respective narrowband base station-to-UE physical control channels (e.g., NPDCCHs) and/or base station-to-UE physical shared channels (e.g., NPDSCHs) for the different physical random access channels (e.g., NPRACHs).

For example, for specific orthogonal cover code (e.g., OCC) index value(s), random access radio network temporary identifier (e.g., RA-RNTI) values may be the same.

For example, a random access radio network temporary identifier (e.g., RA-RNTI) value may be different between a case in which an all-ones orthogonal cover code (e.g., OCC) is applied to a physical random access channel (e.g., NPRACH) transmission and a case in which another orthogonal cover code (e.g., OCC) is applied. This may be for distinguishing UEs that can receive a random access response (e.g., RAR) through a same narrowband base station-to-UE physical control channel (e.g., NPDCCH) / base station-to-UE physical shared channel (e.g., NPDSCH) in a situation in which legacy UEs that do not apply an orthogonal cover code (e.g., OCC) coexist in a cell.

The proposed method may be applied to devices described below. First, a processor (202) of a receiving UE may configure at least one bandwidth part (e.g., BWP; bandwidth part). And, the processor (202) of the receiving UE may control a transceiver (206) of the receiving UE to receive, from a transmitting UE, an inter-UE communication (e.g., SL communication)-related physical channel and/or an inter-UE communication (e.g., SL communication)-related reference signal on the at least one bandwidth part (e.g., BWP).

For example, internet of things (e.g., IoT; internet of things) may refer to a common network to which various devices are connected. A non-terrestrial network (e.g., NTN; non-terrestrial network) may refer to communication based on a base station or a network that is not located on the ground (for example, when the base station or the network is flying in an orbit). Here, an internet of things (e.g., IoT) non-terrestrial network (e.g., NTN) may refer to a case in which a base station or a network that is not located on the ground (for example, when the base station or the network is flying in an orbit) is involved in internet of things (e.g., IoT). A narrowband carrier may be used for the internet of things (e.g., IoT) non-terrestrial network (e.g., NTN).

In this case, in an internet of things (e.g., IoT) non-terrestrial network (e.g., NTN), when a number of UEs in a cell is excessively large, a problem may occur in that collisions among narrowband physical random access channel (e.g., NPRACH; narrowband physical random access channel) resources frequently occur. When an orthogonal cover code (e.g., OCC; orthogonal cover code) is additionally considered for a narrowband physical random access channel (e.g., NPRACH) transmission, there may be a need to distinguish a random access preamble identifier (e.g., RAPID; random access preamble identifier) between a narrowband physical random access channel (e.g., NPRACH) resource using an existing same starting subcarrier and a narrowband physical random access channel (e.g., NPRACH) resource distinguished by an orthogonal cover code (e.g., OCC). Here, since a narrowband physical random access channel (e.g., NPRACH) is a type of a physical random access channel (e.g., PRACH), the description and features of the narrowband physical random access channel (e.g., NPRACH) may be extended and applied to the physical random access channel (e.g., PRACH).

According to an embodiment of the present disclosure, a device may transmit a random access preamble based on a physical random access channel (e.g., PRACH) resource and may receive a random access response (e.g., RAR; random access response) as a response to transmission of the random access preamble. Here, a random access response (e.g., RAR) may include a random access preamble identifier (e.g., RAPID), and the random access preamble identifier (e.g., RAPID) may be determined based on a subchannel index of the physical random access channel (e.g., PRACH) resource and an orthogonal cover code (e.g., OCC) index. For example, a physical random access channel (e.g., PRACH) resource may be a resource to which an orthogonal cover code (e.g., OCC) is applied based on an orthogonal cover code (e.g., OCC) index. For example, an orthogonal cover code (e.g., OCC) may be applied in units of symbols or symbol sets in a symbol group in a physical random access channel (e.g., PRACH) resource. For example, an orthogonal cover code (e.g., OCC) having a length of 5 or a length of 2 or 3 may be applied to a sequence symbol region excluding a cyclic prefix (e.g., CP; cyclic prefix). For example, in various embodiments of the present disclosure, a random access preamble identifier (e.g., RAPID) may be defined in a form (or order) in which a start subcarrier index is incremented and then an orthogonal cover code (e.g., OCC) index is incremented.

According to various embodiments of the present disclosure, by applying an orthogonal cover code (e.g., OCC), resource efficiency of a random access procedure may be increased, thereby providing an effect of solving a resource shortage problem in an internet of things (e.g., IoT) non-terrestrial network (e.g., NTN), and a probability of collision among narrowband physical random access channel (e.g., NPRACH) resources may be efficiently reduced. For example, random access preamble identifiers (e.g., RAPIDs; random access preamble identifiers) may be efficiently distinguished between a narrowband random access channel (e.g., NPRACH) resource to which an orthogonal cover code (e.g., OCC) is not applied and a narrowband random access channel (e.g., NPRACH) resource to which an orthogonal cover code (e.g., OCC) is applied.

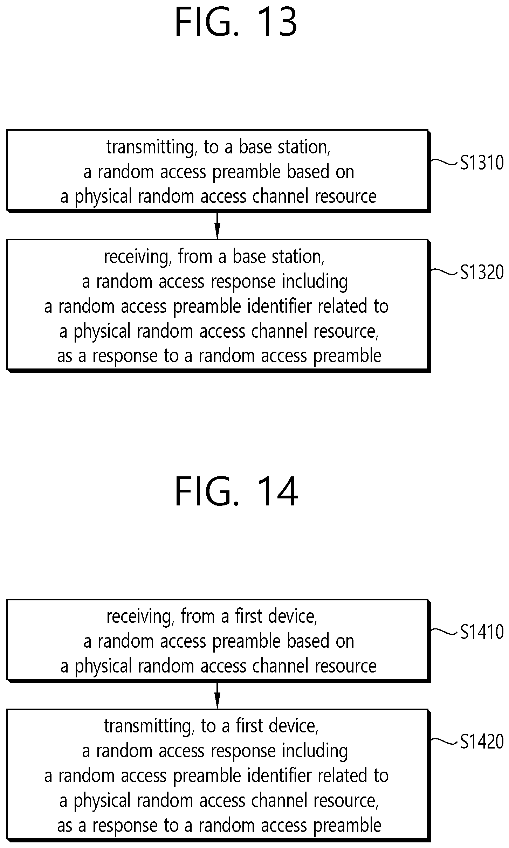

FIG. 13 shows a procedure of a method that may be performed by a first device, according to an embodiment of the present disclosure. The embodiment of FIG. 13 may be combined with various embodiments of the present disclosure.

Referring to FIG. 13, in step S1310, a first device may transmit, to a base station, a random access preamble based on a physical random access channel resource. In step S1320, the first device may receive, from the base station, a random access response including a random access preamble identifier related to the physical random access channel resource, as a response to the random access preamble. For example, the physical random access channel resource may be a resource to which an orthogonal cover code is applied based on an orthogonal cover code index, and the random access preamble identifier may be determined based on a subchannel index related to the physical random access channel resource and the orthogonal cover code index.

For example, additionally, the first device may transmit, to the base station, a message based on the random access response, as a response to the random access response; and monitor information related to a contention resolution, that is to be transmitted by the base station, as a response to the message.

For example, additionally, the first device may receive information related to the contention resolution; and perform communication based on the information related to the contention resolution.

For example, the random access preamble identifier may be incremented such that the subchannel index is incremented up to a maximum value, and then the orthogonal cover code index is incremented.

For example, the physical random access channel resource may include a plurality of first resource units, a first resource unit may be composed of a plurality of second resource units whose frequency regions do not overlap with each other, and a second resource unit may be composed of a plurality of symbol groups whose frequency regions do not overlap with each other.

For example, a length of a cyclic prefix symbol constituting a first symbol group included in the plurality of symbol groups and a length of a symbol of a sequence constituting the first symbol group may be the same.

For example, the orthogonal cover code may be applied to the physical random access channel resource, based on the length of the cyclic prefix symbol and the length of the symbol of the sequence being the same.

For example, the orthogonal cover code may be applied to a first resource of a first resource unit included in the plurality of first resource units.

For example, the orthogonal cover code may be applied to a first resource of a second resource unit included in the plurality of second resource units.

For example, the physical random access channel resource may include a narrowband physical random access channel resource.

For example, the random access response may be received based on a base station-to-user equipment, UE, physical control channel resource or a base station-to-UE physical shared channel resource.

For example, the base station-to-UE physical control channel resource may include a narrowband base station-to-UE physical control channel resource, and the base station-to-UE physical shared channel resource may include a narrowband base station-to-UE physical shared channel resource.

The above-described embodiment may be applied to various devices described below. First, a processor 102 of a first device 100 may control a transceiver 106 to transmit, to a base station 200, a random access preamble based on a physical random access channel resource. And, the processor 102 of the first device 100 may control the transceiver 106 to receive, from the base station 200, a random access response including a random access preamble identifier related to the physical random access channel resource, as a response to the random access preamble. For example, the physical random access channel resource may be a resource to which an orthogonal cover code is applied based on an orthogonal cover code index, and the random access preamble identifier may be determined based on a subchannel index related to the physical random access channel resource and the orthogonal cover code index.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

For example, additionally, the instructions may cause the first device to: transmit, to the base station, a message based on the random access response, as a response to the random access response; and monitor information related to a contention resolution, that is to be transmitted by the base station, as a response to the message.

For example, additionally, the instructions may cause the first device to: receive information related to the contention resolution; and perform communication based on the information related to the contention resolution.

For example, the random access preamble identifier may be incremented such that the subchannel index is incremented up to a maximum value, and then the orthogonal cover code index is incremented.

For example, the physical random access channel resource may include a plurality of first resource units, a first resource unit may be composed of a plurality of second resource units whose frequency regions do not overlap with each other, and a second resource unit may be composed of a plurality of symbol groups whose frequency regions do not overlap with each other.

For example, a length of a cyclic prefix symbol constituting a first symbol group included in the plurality of symbol groups and a length of a symbol of a sequence constituting the first symbol group may be the same.

For example, the orthogonal cover code may be applied to the physical random access channel resource, based on the length of the cyclic prefix symbol and the length of the symbol of the sequence being the same.

For example, the orthogonal cover code may be applied to a first resource of a first resource unit included in the plurality of first resource units.

For example, the orthogonal cover code may be applied to a first resource of a second resource unit included in the plurality of second resource units.

For example, the physical random access channel resource may include a narrowband physical random access channel resource.

For example, the random access response may be received based on a base station-to-user equipment, UE, physical control channel resource or a base station-to-UE physical shared channel resource.

For example, the base station-to-UE physical control channel resource may include a narrowband base station-to-UE physical control channel resource, and the base station-to-UE physical shared channel resource may include a narrowband base station-to-UE physical shared channel resource.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

According to an embodiment of the present disclosure, a non-transitory computer-readable storage medium storing instructions may be proposed. For example, the instructions, when executed, may cause a first device to: transmit, to a base station, a random access preamble based on a physical random access channel resource; and receive, from the base station, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

FIG. 14 shows a procedure of a method that may be performed by a second device, according to an embodiment of the present disclosure. The embodiment of FIG. 14 may be combined with various embodiments of the present disclosure.

Referring to FIG. 14, in step S1410, a second device may receive, from a first device, a random access preamble based on a physical random access channel resource. In step S1420, the second device may transmit, to the first device, a random access response including a random access preamble identifier related to the physical random access channel resource, as a response to the random access preamble. For example, the physical random access channel resource may be a resource to which an orthogonal cover code is applied based on an orthogonal cover code index, and the random access preamble identifier may be determined based on a subchannel index related to the physical random access channel resource and the orthogonal cover code index.

For example, the random access preamble identifier may be incremented such that the subchannel index is incremented up to a maximum value, and then the orthogonal cover code index is incremented.

The above-described embodiment may be applied to various devices described below. First, a processor 202 of a second device 200 may control a transceiver 206 to receive, from a first device 100, a random access preamble based on a physical random access channel resource. And, the processor 202 of the second device 200 may control the transceiver 206 to transmit, to the first device 100, a random access response including a random access preamble identifier related to the physical random access channel resource, as a response to the random access preamble. For example, the physical random access channel resource may be a resource to which an orthogonal cover code is applied based on an orthogonal cover code index, and the random access preamble identifier may be determined based on a subchannel index related to the physical random access channel resource and the orthogonal cover code index.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, a random access preamble based on a physical random access channel resource; and transmit, to the first device, a random access response including a random access preamble identifier related to the physical random access channel resource, as a response to the random access preamble, wherein the physical random access channel resource may be a resource to which an orthogonal cover code is applied based on an orthogonal cover code index, and wherein the random access preamble identifier may be determined based on a subchannel index related to the physical random access channel resource and the orthogonal cover code index.

For example, the random access preamble identifier may be incremented such that the subchannel index is incremented up to a maximum value, and then the orthogonal cover code index is incremented.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

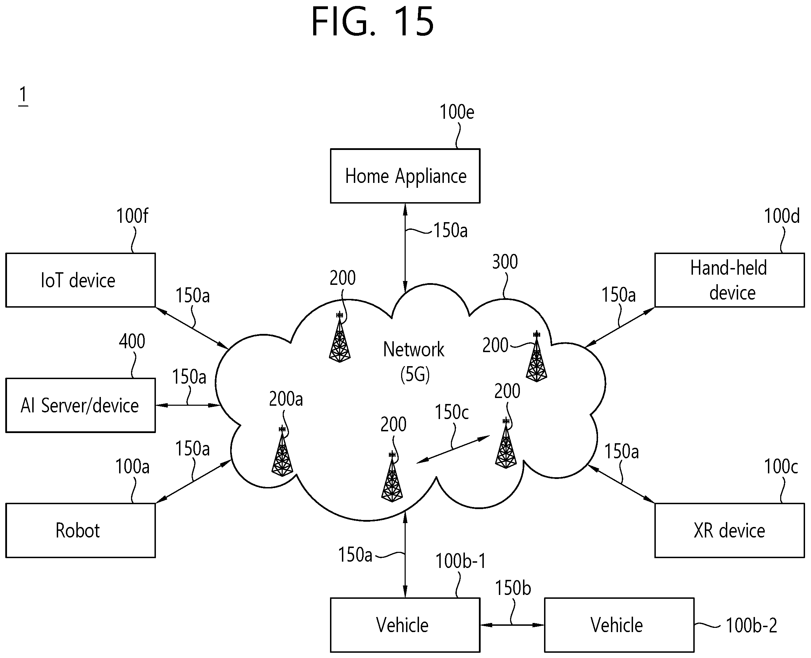

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

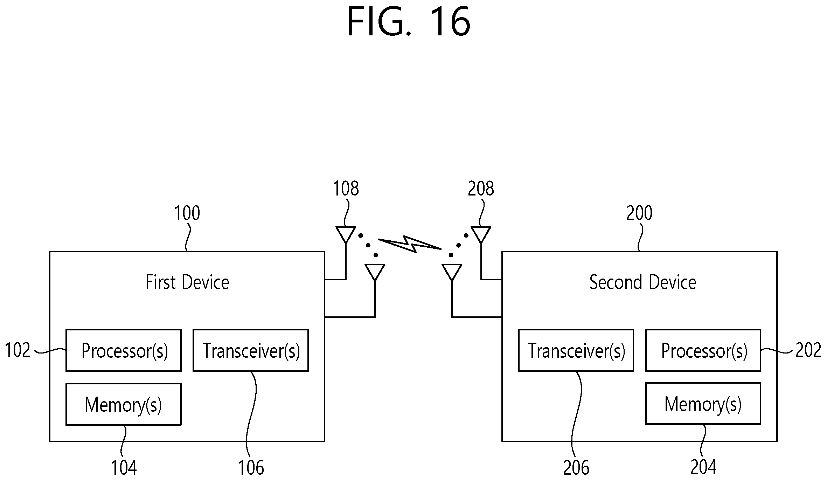

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

For example, in the following, description for a first wireless device (or apparatus) and a second wireless device (or apparatus) may be extended to a wireless device (or apparatus) corresponding to a third wireless device 300 (or apparatus) or a subsequent reference number. For example, a reference number of a processor of the third wireless device 300 may be 302, and a reference number of a transceiver may be 306.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

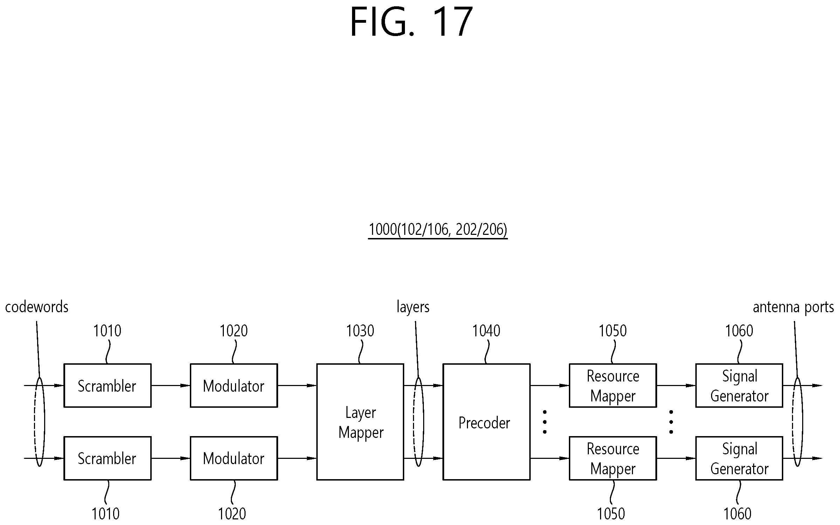

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

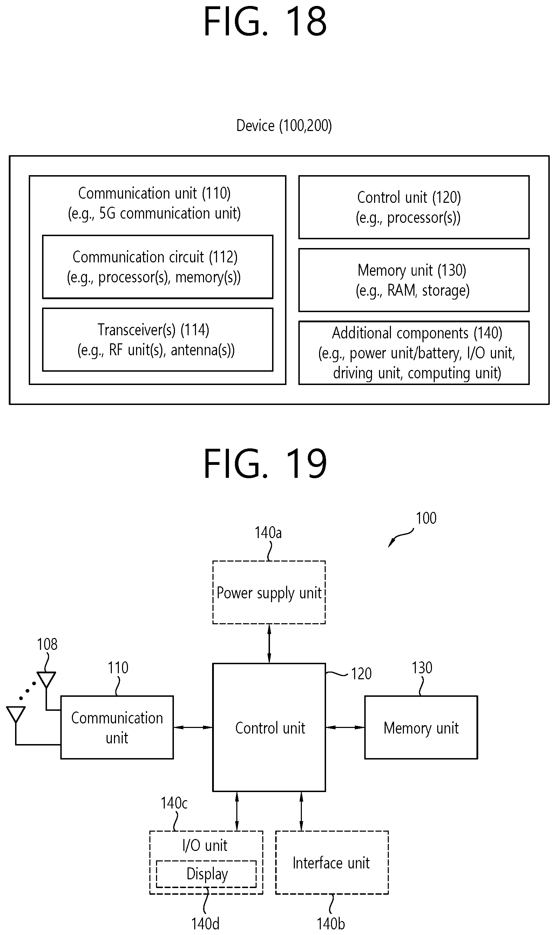

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

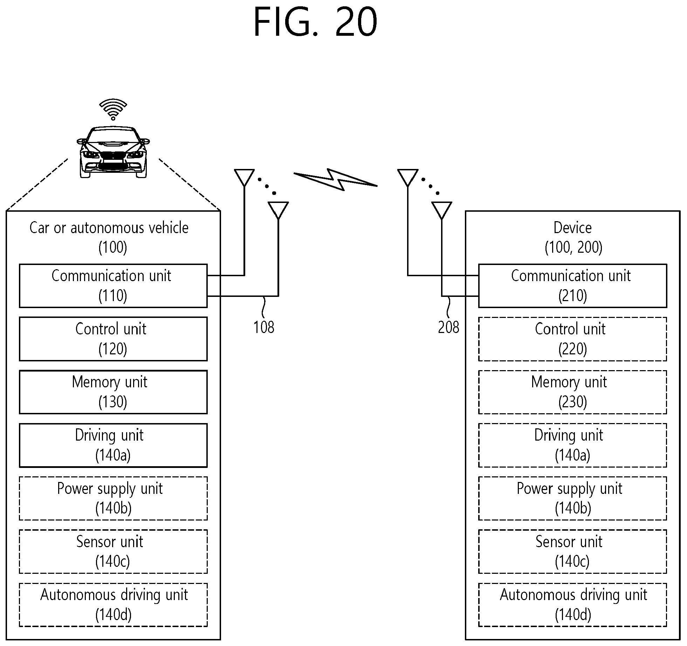

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
transmitting, to a base station, a random access preamble based on a physical random access channel resource; and
receiving, from the base station, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

2. The method of claim 1, further comprising:
transmitting, to the base station, a message based on the random access response, as a response to the random access response; and
monitoring information related to a contention resolution, that is to be transmitted by the base station, as a response to the message.

3. The method of claim 2, further comprising:
receiving information related to the contention resolution; and
performing communication based on the information related to the contention resolution.

4. The method of claim 1, wherein the random access preamble identifier is incremented such that the subchannel index is incremented up to a maximum value, and then the orthogonal cover code index is incremented.

5. The method of claim 1, wherein the physical random access channel resource includes a plurality of first resource units,
wherein a first resource unit is composed of a plurality of second resource units whose frequency regions do not overlap with each other, and
wherein a second resource unit is composed of a plurality of symbol groups whose frequency regions do not overlap with each other.

6. The method of claim 5, wherein a length of a cyclic prefix symbol constituting a first symbol group included in the plurality of symbol groups and a length of a symbol of a sequence constituting the first symbol group are the same.

7. The method of claim 6, wherein the orthogonal cover code is applied to the physical random access channel resource, based on the length of the cyclic prefix symbol and the length of the symbol of the sequence being the same.

8. The method of claim 5, wherein the orthogonal cover code is applied to a first resource of a first resource unit included in the plurality of first resource units.

9. The method of claim 5, wherein the orthogonal cover code is applied to a first resource of a second resource unit included in the plurality of second resource units.

10. The method of claim 1, wherein the physical random access channel resource includes a narrowband physical random access channel resource.

11. The method of claim 1, wherein the random access response is received based on a base station-to-user equipment, UE, physical control channel resource or a base station-to-UE physical shared channel resource.

12. The method of claim 11, wherein the base station-to-UE physical control channel resource includes a narrowband base station-to-UE physical control channel resource, and
wherein the base station-to-UE physical shared channel resource includes a narrowband base station-to-UE physical shared channel resource.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
transmit, to a base station, a random access preamble based on a physical random access channel resource; and
receive, from the base station, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

15. A processing device adapted to control a first device, the processing device comprising:
at least one processor; and
at least one memory connected to the at least one processor and storing instructions,
wherein the instructions, based on being executed by the at least one processor, cause the first device to:
transmit, to a base station, a random access preamble based on a physical random access channel resource; and
receive, from the base station, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

16. A non-transitory computer-readable storage medium storing instructions that, when executed, cause a first device to:
transmit, to a base station, a random access preamble based on a physical random access channel resource; and
receive, from the base station, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

17. A method comprising:
receiving, from a first device, a random access preamble based on a physical random access channel resource; and
transmitting, to the first device, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

18. The method of claim 17, wherein the random access preamble identifier is incremented such that the subchannel index is incremented up to a maximum value, and then the orthogonal cover code index is incremented.

19. A second device comprising:
at least one transceiver;
at least one processor; and
at least one memory connected to the at least one processor and storing instructions,
wherein the instructions, based on being executed by the at least one processor, cause the second device to:
receive, from a first device, a random access preamble based on a physical random access channel resource; and
transmit, to the first device, a random access response including a random access preamble identifier related to the physical random access channel resource, as a response to the random access preamble,
wherein the physical random access channel resource is a resource to which an orthogonal cover code is applied based on an orthogonal cover code index, and
wherein the random access preamble identifier is determined based on a subchannel index related to the physical random access channel resource and the orthogonal cover code index.

20. The second device of claim 19, wherein the random access preamble identifier is incremented such that the subchannel index is incremented up to a maximum value, and then the orthogonal cover code index is incremented.
